# EUROPEAN PATENT SPECIFICATION

(11) **EP 1 376 927 B1**
(45) Date of publication and mention of the grant of the patent: **09.04.2008**
(21) Application number: 03013281.5
(22) Date of filing: 12.06.2003
(51) Int. Cl.: H04L 12/18, H04L 29/08

(54) **Data projection system and method**
Vorrichtung und Verfahren zur Projektion von Daten
Système et méthode pour projeter des données

(30) Priority: 25.06.2002 US 179431
(43) Date of publication of application: 02.01.2004
(73) Proprietor: MICROSOFT CORPORATION, Redmond, WA 98052 (US)
(72) Inventor: Manion, Todd R., Redmond, Washington 98052 (US); Donner, Robert D., Sammamish, Washington 98074 (US); Richards, Kenneth G., Renton, Washington 98056 (US); Shappell, Michael E., Issaquah, Washington 98029 (US)
(74) Representative: Grünecker, Kinkeldey, Stockmair & Schwanhäusser Anwaltssozietät

(56) References cited:
- US-A1- 2002 029 256
- WONG A Y -L ET AL: "Evaluating Windows NT terminal server performance" , PROCEEDINGS OF THE 3RD USENIX WINDOWS NT SYMPOSIUM, PROCEEDINGS OF 3RD USENIX WINDOWS NT SYMPOSIUM, SEATTLE, WA, USA, 12-15 JULY 1999 , 1999, BERKELEY, CA, USA, USENIX ASSOC, USA, PAGE(S) 145 - 154 XP009017901 ISBN: 1-880446-29-4 * page 145, left-hand column, paragraph 1 - page 146, left-hand column, paragraph 4 *

## Description

### TECHNICAL FEIELD

This invention relates generally to the technology of information sharing and, more particularly, relates to a system and method for simplified information projection to a projector or other device or devices.

### BACKGROUND OF THE INVENTION

Despite the technological advances realized in recent years, many traditional business activities still have a prominent place in today's workplaces. One such activity is the meeting or conference. Often, such a collaborative effort will involve a presentation of material by one participant to a number of other participants. Traditional means for presenting information include projection on a screen, display on a monitor or other optically active device, or presentation in hard copy form, such as on a white board, chalkboard or easel. While each of these methods has benefits and drawbacks in terms of cost, complexity, and effectiveness, projection and display are typically best suited for rapidly changing data such as may be presented via slides or video. Additionally, projection and display are also ideal for sharing of information from the screen of a computer or other computing device, such as during a MICROSOFT brand POWER POINT slide presentation.

Unfortunately for projection technology users and participants, traditional mechanisms for projection and display of information from a computing device, while highly effective once initiated, have often been complex to establish, requiring the connection of cords, such as VGA cables, and the setting of various parameters. This complexity can lead to complications before and during a presentation, and often lead to delay in commencing a presentation. Additionally, such mechanisms do not allow simple and rapid transfer of control of the presentation from one speaker to another. Thus, for example, if a first speaker is using a PC to present a POWER POINT slide show and wishes to cede the floor to a second speaker, the second speaker typically must physically leave their chair and walk to a location next to the first speaker's PC, during which time there will be discontinuity, delay, and distraction for the other participants.

A system and method of conferencing presentation are needed whereby set up of a conferencing presentation is simplified and whereby control and transfer of presentation management can occur with decreased complexity and improved speed.

US 2002/029256 A1 describes a technology to dynamically connect distributed devices and services. A device makes itself known and available for communication with other entities on a computing network so that user installation experience can be avoided. This open network architecture is called Universal Plug and Play (UPnP), and includes user control points which initiate discovery and communication with controlled devices and receive events from controlled devices. A user control point is typically implemented on a device having a user interface. A controlled device (UPnP device) provides a description document which describes the capabilities of the device. After retrieving the description document, a control point is able to control the device and therefore sends an action request to the device's service. In response, the service of the device provides a simple acknowledgement and further allows the control point to request a certain action. In addition, a UPnP device has a presentation page which can be loaded into a browser and allows a user to control the device and/or view device status.

Wong A.Y.-L. et al., "Evaluating Windows NT terminal server performance", Proceedings of the 3rd USENIX Windows NT Symposium, Seattle, WA, USA, 12-15 July 1999, pages 145- 154 (XP009017901) describes the evaluation of the performance of a Windows NT terminal server. A terminal server offers the possibility of thin-client computing for multiple users having remote access to the server. The system is divided into a terminal server and different terminal clients communicating with a remote display protocol. The communication includes control messages, for example keystrokes or mouse events, sent from the clients to the server and display messages sent from the server to the clients.

### SUMMARY OF THE INVENTION

It is the object of the invention to obtain faster control and access to projectors, and to present data from a computing device with as little user intervention as possible.

This object is solved by the invention as claimed in the independent claims.

Preferred embodiments are defined by the dependent claims.

A novel system and method are described for increasing the effectiveness and simplicity of information projection. The scenarios enabled involve the automatic connection of a presenter's device to a projection screen or other projection target. Rather than being required to find and connect various wires and cables in order to make a presentation, the presenter simply walks into a room, whereupon his or her laptop computer or other device discovers and connects to the desired projection target, such as a conference room projector, with minimal effort on the part of the presenter.

In an embodiment of the invention, a reverse terminal server model is utilized to establish a connection from a presentation server, or projection device, to a presentation client, or projection target. The discovery by the projection device of the projection target is by way of the Universal Plug and Play protocol. Once discovery has been accomplished, a terminal services session is commenced via the reverse terminal server model to enable the exchange of screen data and/or other data between the projection device and the projection target. In an embodiment, shadowing is used to provide the display on the terminal services server while the terminal services client renders the information for presentation.

Other features and advantages of various embodiments of the invention will become apparent from the detailed description set forth hereinafter.

### BRIEF DESCRIPTION OF THE DRAWINGS

While the appended claims set forth the features of the present invention with particularity, the invention, together with its objects and advantages, may be best z understood from the following detailed description taken in conjunction with the accompanying drawings of which:
Figure 1 is a block diagram generally illustrating an exemplary computer system usable in an implementation of an embodiment of the invention;
Figures 2A and 2B are schematic diagrams showing alternative architectures of a network system within which an embodiment of the invention may be implemented, including multiple computers comprising a projecting computer and multiple projection target computers, as well as an electronic conference room display screen or projector;
Figure 3 is a schematic diagram illustrating in greater detail the placement and interconnectivity of projection application program components and related components in an embodiment of the invention; and
Figure 4 is a flow chart describing the steps taken in an embodiment of the invention to initiate a projection session between a projecting device and a projection target device.

### DETAILED DESCRIPTION OF THE INVENTION

Turning to the drawings, wherein like reference numerals refer to like elements, the invention is illustrated as being implemented in a suitable computing environment. Although not required, the invention will be described in the general context of computer-executable instructions, such as program modules, being executed by a personal computer. Generally, program modules include routines, programs, objects, components, data structures, etc. that perform particular tasks or implement particular abstract data types. Moreover, those skilled in the art will appreciate that the invention may be practiced with other computer system configurations, including hand-held devices, multiprocessor systems, microprocessor based or programmable consumer electronics, network PCs, minicomputers, mainframe computers, and the like. The invention is primarily for use in a networked environment and may further be practiced in distributed computing environments where tasks are performed by remote processing devices that are linked through a communications network. In a distributed computing environment, program modules may be located in both local and remote memory storage devices.

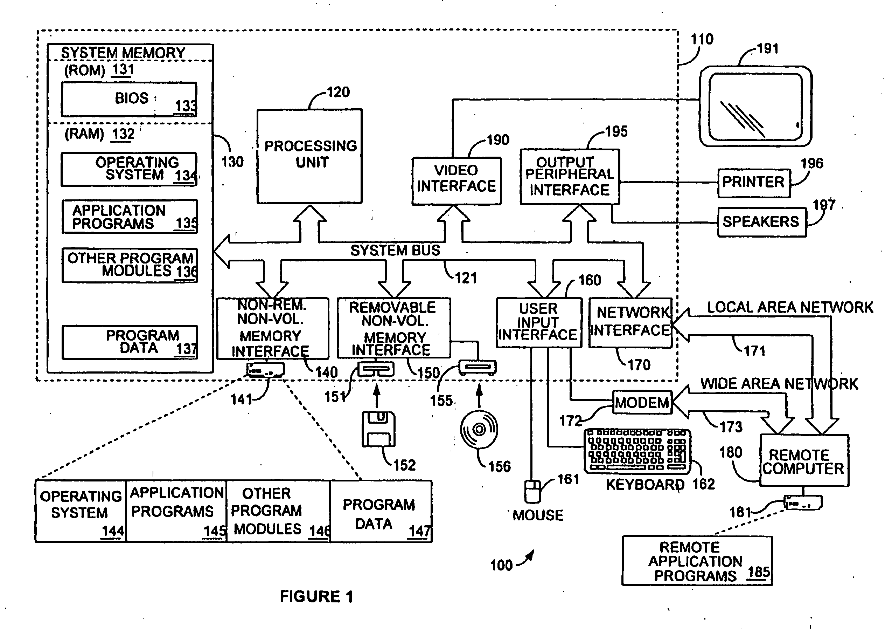

Figure 1 illustrates an example of a suitable computing system environment 100 usable in an implementation of the invention, and according to which either or both of a projection device and a projection target device may operate. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100. Furthermore, note that the term "projector" includes, but is not limited to, any group display mechanism with wireless capability. It is not required that the projector comprise a wireless interface, since, for example, in some embodiments of the invention the projector may be physically wired to an infrastructure.

The invention may be implemented by way of numerous other general purpose or special purpose computing system environments or configurations. Examples of well known computing systems, environments, and/or configurations that are suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

An exemplary system for implementing the invention includes a general-purpose computing device in the form of a computer 110. Components of the computer 110 generally include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example only, and not limitation, such architectures include Industry Standard Architecture (ISA) bus, Micro Channel Architecture (MCA) bus, Enhanced ISA (EISA) bus, Video Electronics Standards Associate (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example only, and not limitation, computer readable media may comprise computer storage media and communication media.

Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110.

Communication media typically embodies computer readable instructions, data structures, program modules or other data in a modulated data signal such as a carrier wave or other transport mechanism and includes any information delivery media. The term "modulated data signal" means a signal that has one or more of its characteristics (such as, for example, voltage or current level, voltage or current pulse existence or nonexistence, voltage or current pulse width, voltage or current pulse spacing, etc.) set or changed in such a manner as to encode information in the signal. By way of example, and not limitation, communication media includes wired media such as a wired network or direct-wired connection, and wireless media such as acoustic, RF, infrared and other wireless media. Combinations of any of the above are also included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates RAM 132 as containing operating system 134, application programs 135, other program modules 136, and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD-ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 110 through input devices such as a keyboard 162, pointing device 161 (commonly referred to as a mouse), and trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A dedicated monitor 191 or other type of display device may also be connected to the system bus 121 via an interface, such as a video interface 190. In addition to the monitor, computer 110 may also include other peripheral output devices such as speakers 197 and printer 196, which may be connected through an output peripheral interface 195.

In the implementation of an embodiment of the invention, the computer 110 operates in a networked environment using logical connections to one or more remote computers, such as a remote computer 180. The remote computer 180 may be a personal computer, a router, a network PC, a peer device or other common network node, or a dedicated projection target device such as an electronic projection screen or monitor, and in any case the remote computer or computers typically include many or all of the elements described above relative to the personal computer 110, although only a memory storage device 181 has been illustrated in Figure 1, and although in some cases the remote computer can lack much of the functionality contained in the computer 110. The logical connections depicted in Figure 1 include a local area network (LAN) 171 and a wide area network (WAN) 173, but the computer 110 may additionally or alternatively use one or more other networking environments. For example, the computer 110 may reside on an ad hoc network via a communications interface such as a wireless interface. Networking environments of all types are commonplace in offices, enterprise-wide computer networks, intranets and the Internet.

The computer 110 should include facilities for accessing the networks to which it is attachable. For example, when used in a LAN networking environment, the personal computer 110 is connected to the LAN 171 through a network interface or adapter 170. Another node on the LAN, such as a proxy server, may be further connected to a WAN such as the Internet. When used in a WAN networking environment, the computer 110 typically includes a modem 172 or other means for establishing communications directly or indirectly over the WAN 173, such as the Internet. The modem 172, which may be internal or external, may be connected to the system bus 121 via the user input interface 160, or other appropriate mechanism. Typically, wireless network interfacing, be it to a LAN, WAN, ad hoc network, or other network type, will allow the greatest freedom to reap the benefits of the invention, although the invention also contemplates the use of more traditional hard wired interfaces.

In a networked environment, program modules depicted relative to the personal computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used. It is not intended to limit the invention to use in a permanent network infrastructure, since it may also be used in transiently connected environments, such as for example a wholly or partially wireless network environment interconnected wholly or partially via optical, infrared, and/or radio frequency wireless connections.

Herein, the invention is described with reference to acts and symbolic representations of operations that are performed by one or more computers, unless indicated otherwise. As such, it will be understood that such acts and operations, which are at times referred to as being computer-executed, include the manipulation by the processing unit of the computer of electrical signals representing data in a structured form. This manipulation transforms the data or maintains it at locations in the memory system of the computer, which reconfigures or otherwise alters the operation of the computer in a manner well understood by those skilled in the art. The data structures where data is maintained are physical locations of the memory that have particular properties defined by the format of the data. However, while the invention is being described in the foregoing context, it is not meant to be limiting as those of skill in the art will appreciate that various of the acts and operation described hereinafter may also be implemented in hardware.

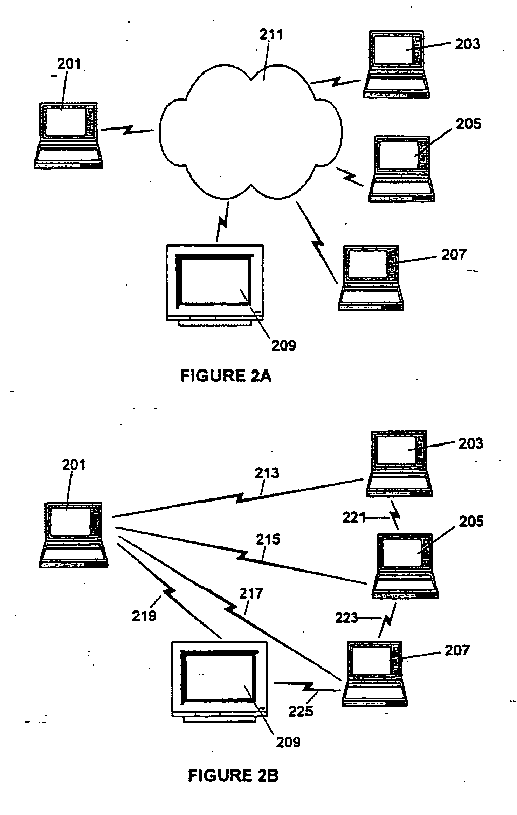

Figure 2A illustrates schematically a networking environment within which the present invention may be implemented. In particular, the network environment shown in the figure includes a projection device 201, which may be any computing device such as, for example, those described above in reference to Figure 1, for projecting information to one or more projection target devices 203, 205, 207, and 209. Projection target devices 203-207 are illustrated as non-dedicated computing devices similar to the projection device 201. In this case, for example, the devices 201-207 may be, by way of example and not limitation, laptop computers, desktop computers, handheld computing devices, any other multi-purpose computing devices, or any combination of these types of devices. A projection target device need not be a traditional computing device, and may be for example a television system. Network 211 is usable to transfer information between the target devices 203-207 and the projection device 201. -

Similarly, the projection targets may additionally or alternatively include a dedicated projection device such as an electronic conference room projector or display device 209. As with the other projection targets 203-207, the target device 209 preferably communicates with the projection device 201 via network 211. Network 211 may be any type of network, but will typically comprise wireless interfaces between the projecting device 201 and the network 211, and between the network 211 and the projection targets 203-207. Furthermore, the interface between the network 211 and the dedicated projection device 209 may desirably be either wired or wireless. For example, since the dedicated projection device 209 can remain in a particular location, such as a conference room, for a long period of time, there is no significant decrease in device utility by having a wired interface from the device 209 to the network 211. The network 211 itself will generally, although not necessarily, be a wired infrastructure such as a corporate LAN, a WAN, or other traditional wholly or partially wired network.

An alternative network environment is shown schematically in Figure 2B. In particular, projection device 201 and projection targets 203-209 are interconnected via an ad hoc wireless network consisting of wireless links 213-225. Note that not all of connections 213-225 are necessary since an ad hoc network does not require direct connection of every node to every other node. For example, a node may be connected to all nodes of the ad hoc network indirectly via a single connection to another node. Thus, ad hoc topologies include rings, lines, webs, hub-and-spokes, and/or other topologies as needed. Often, the physical distance of a particular device from other devices will determine to which device or devices, if any, of the ad hoc network the particular device connects directly.

The usage and interaction scenarios of the aforementioned components will be described briefly hereinafter before proceeding to a detailed description of the interaction mechanics. The projection device 201 is in the possession of a presenting individual wishing to project material of interest to receiving individuals, typically in a conference room or meeting room setting, although the inventive system is also usable in non-business settings, such as in a home environment, as well. The material of interest may be graphical, such as images or video, or textual such as in a document, chart etc., and may also include audio elements. In an embodiment of the invention, the material of interest is entirely audio information. Although the material of interest need not be computer-generated, it is preferably accessible to the projection device 201 locally or remotely in a computer-readable format. The projection target devices 203-207 may be the laptop computers of the receiving individuals, while the projection target device 209 may be a dedicated projection system, such as a conference room projector or large screen monitor or other display not typically associated physically with any one user, unlike a mobile laptop or handheld device.

The network connectivity between the devices 203-209 typically commences as each device comes into communication range of the projection device 201 associated with the presenting user. Thus for example, assume that the dedicated device 209 resides permanently in a conference room. When the presenting user enters the conference room with the projection device 201, a wireless connection, either ad hoc or via a network infrastructure, is formed between the dedicated device 209 and the projection device 201. The presenting user is then able to project material from his device 201 onto the screen of the dedicated device 209 for the receiving individuals to observe. In this manner, the presenting user has effected a presentation without physically connecting any cables or cords, and can similarly end the presentation, or transfer its control to another presenting individual using another projection device, without disconnecting any cables or cords.

In much the same way, the presenting user can present material of interest to a number of target devices such as devices 203-207. For example, the network connection between the projection device 201 and the target devices 203-207 is automatically executed after automated discovery without requiring the user to locate and manipulate physical connections. In this case, the presentation of material occurs from the projection device 201 to the screens of the target devices, which may be laptop computers belonging to receiving individuals.

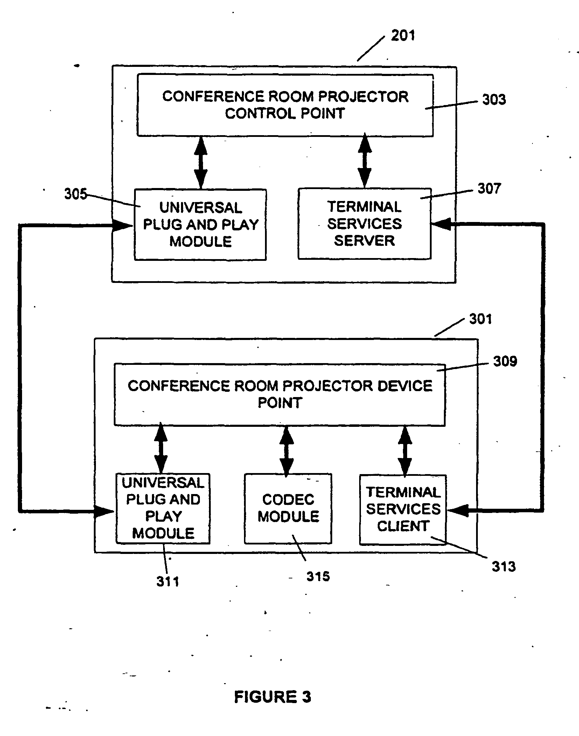

Specific exemplary architectures of the projection device 201 and a projection target 301 are illustrated in greater detail schematically in Figure 3. Although only one projection target is illustrated in Figure 3, it will be appreciated that the invention contemplates the use of multiple and varied such devices as well, as illustrated by way of Figure 2. It can be seen that the projection device 201 architecture comprises a projector control point 303, a Universal Plug and Play component 305, and a terminal services server 307. The projector control point 303 is an application that controls the function of the Universal Plug and Play component 305 and the terminal services server 307 to establish and maintain a projection session. The projector control point 303 is also responsible for presentation of user interface information to the presenting individual via a display of the device 201. Such user interface information preferably comprises a selection window within which the presenting user may view available projection targets and select desired connection targets. Other connection information such as time, status, control change requests and so forth may also be presented in the user interface by the projector control point 303.

Similarly, the projection target 301 architecture comprises a projector device point 309, a Universal Plug and Play component 311, and a terminal services client 313. As with the projection device 201 architecture, the projector device point 309 is an application that controls the Universal Plug and Play component 311 and the terminal services client 313 during the set up and utilization of a projection session. The Universal Plug and Play component 311 of the projection target 301 cooperates with the Universal Plug and Play component 305 of the projection device 201 to facilitate discovery by the projection device 201 of the projection target 301 in an embodiment of the invention as will be described hereinafter. In a similar manner, the terminal services client 313 of the projection target 301 cooperates with the terminal services server 307 of the projection device 201 during the projection session to facilitate the exchange of presentation information from the projection device 201 to the projection target 301, as will be described hereinafter in greater detail.

Although not explicitly shown, each of the projection device 201 and the projection target 301 preferably also includes an operating system for controlling the basic operation of the relevant device. Although there is no limitation within the invention as to suitable operating systems, it has been observed that the XP brand operating system and the WINDOWS CE brand operating system, both by MICROSOFT of Redmond, Washington, are ideally suited for use within the invention. In particular, the projection target 301 can advantageously use the WINDOWS CE brand operating system since the projection target 301 may have both limited computation demands and limited computational resources.

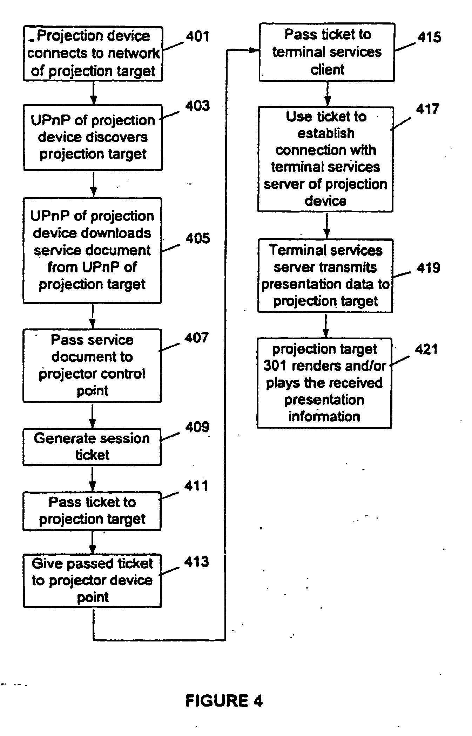

Note that the projection target 301 architecture also comprises a codec module 315 in an embodiment of the invention. The codec module 315 is used to interpret or decode information received by the projection target 301 from the projection device 201 when the received information comprises encoded audio or video information, as will be described in greater detail below with respect to Figure 4. Note that multiple and/or diverse codecs may be used without limitation.

Figure 4 illustrates in flow chart form the operation of the aforementioned system components during establishment of a projection session, and while the projection session continues in progress. Before a projection session can begin, a connection should be formed between the projection device 201 and the projection target 301 to the extent such a connection is not already open. Thus, at step 401, the projection device 201 forms a connection via an appropriate network interface to the network upon which the projection target 301 resides. If the projection target 301 has not yet connected to the relevant network then it too should connect at this time via an appropriate network interface. In an embodiment of the invention, the network comprises an 802.11 compliant wireless link, operated either in infrastructure mode or as part of an ad hoc network as discussed above.

At this point, the projection device 201 and the projection target 301 are both connected to a common network. Still, each of the projection device 201 and the projection target 301 may remain unaware of the presence of the other as such. If so, then at step 403 the Universal Plug and Play component 305 of the projection device is apprised of the presence of the Universal Plug and Play component 311 of the projection target 301. This step may be carried out either via the standard plug and play announcement mechanism whereby the Universal Plug and Play component 311 of the projection target 301 announces its presence and capabilities to the Universal Plug and Play component 305 of the projection device. Alternatively, the Universal Plug and Play component 305 of the projection device 201 may affirmatively search for and locate the Universal Plug and Play component 311 of the projection target 301.

Although Universal Plug and Play will be familiar to those of skill in the art, a brief overview is provided herein for the convenience of the reader. The reader is invited to consult published standards information for further information if desired. Universal Plug and Play refers to a standardized set of methods for device interaction. In particular, UPnP allows peer-to-peer connectivity of intelligent devices, appliances, and so on. UPnP is applicable within managed, unmanaged, and ad hoc networks. UPnP employs existing TCP/IP and Internet technologies to provide for the exchange of control information and data between networked devices. UPnP networking is designed to be independent of the particular network medium or media being used.

The UPnP control point typically exposes a set of COM (Component Object Model) interfaces through which applications may find and control the host device. Applications use device objects to retrieve information or properties pertaining to the host device. Such information can include, among other information, device hierarchy information, device properties, device manufacturer information, device model information, device display information, and services provided by the device. Note that the UPnP control point need not be a COM entity, although such is discussed herein for purposes of explication. UPnP-enabled devices can be controlled by way of the services they expose, there typically being one service for every primary function that the device can perform. Note that a complex device may be represented by some simple services in addition to other nested devices. A service typically comprises a set of state variables and a set of actions that an application may invoke to operate on one or more variables in the set of state variables. Services are identified by a service type as well as a service ID.

Once the UPnP components 305, 311 of the projection device 201 and the projection target 301 have connected, the UPnP component 305 of the projection device downloads a UPnP service document advertised by the UPnP component 311 of the projection target 301 in step 405. A service document is a computer-parsable document typically containing a description of commands that the associated device will recognize as well as perhaps some other basic device information such as proper name, number of interfaces, etc. In an embodiment of the invention, the service document comprises, in addition to other information, a description of the device resolution, color depth, a current control point, a current state, as well as brightness, contrast, and tint values. In step 407, the retrieved service document is passed to the projector control point 303 of the projection device 201. In this manner, the projector control point 303 is able to enumerate the services that the projection target 301 provides.

At this point, the projection device 201 is aware of the existence and capabilities of the projection target 301 via the UPnP exchange, and a projection session may be connected. A unique reverse terminal server connection technique is followed to create the presentation data exchange connection for the projection session. Thus, at step 409 the projector control point 303 of the projection device 201 generates a session ticket for its terminal services server 307. The session ticket is preferably generated in coordination with the Remote Desktop Protocol (RDP). RDP is a multichannel capable protocol that is an extension of the T.120 family of protocol standards. The protocol supports a plurality of virtual channels, each for exchanging a particular type of information, such as presentation data, input data and so forth. RDP maintains a stack (for the terminal services client or server) that is similar to the stack prescribed by the OSI seven-layer model. In particular, data to be transmitted from the server is processed downward through the protocol stack, sectioned, sent to an appropriate channel, encrypted if appropriate, wrapped, framed, packetized according to a network protocol, addressed, and transmitted to the client. The generated ticket presents information regarding how the projection target 301 should connect (via the terminal services client 313 of the projection target 301) to the projector control point 303 of the projection device 201, as well as in what mode to connect. For example, the connection mode may be specified as a projection mode, extended desktop mode, a mode for display of a particular application's screen information, etc. In addition, the generated ticket is given an unusually limited time out period such as, for example, ten seconds, in order to provide for a more secure connection process between the projection device 201 and the projection target 301. Note that although an embodiment of the invention is described herein by way of RDP, use of RDP is not required in every embodiment, as other technologies such as HTML may alternatively be used.

In step 411, the generated ticket is passed to the projection target 301 via its UPnP component 311 from the UPnP component 305 of the projection device 201. At this point, the ticket information can be used by the projector device point 309 to connect a terminal services session. To facilitate this, the UPnP component 311 of the projection target 301 passes the received ticket to the projector device point 309 at step 413. The projector device point 309 then passes the ticket to the terminal services client 313 at step 415. As the final step to creation of the terminal services connection, the terminal services client 313 of the projection target 301 uses the ticket in step 417 to establish a connection back to the terminal services server 307 of the projection device 201. Note that in an embodiment of the invention, this connection is timed so that it will time out if it remains inactive for longer than a predetermined period of time, such as ten minutes. In this manner, a projection device user will not be able to inadvertently monopolize the projection target, such as by walking away without closing the connection, when another user could be waiting to use the target. In step 419, with the terminal services connection having been established, the terminal services server 307 of the projection device 201 transmits presentation data such as screen data from the screen of the projection device 201 to the projection target 301 via the connection.

Note that the data transmitted at step 419 or subsequently may consist of or comprise audio and or video information. This information is preferably encoded to conserve bandwidth, and as such the codec module 315 of the projection target is used to decode the information. In an embodiment of the invention, the audio and/or video information of interest may not be played at the projection device 201 itself but rather only at the projection target 301. In this manner, copyright restrictions regarding numbers of licensed users may be adhered to when present. Similarly for text or other non-video visual information, copyright restrictions should be respected where appropriate by restricting the number of screens upon which, or users to which, the relevant information is displayed. It is also contemplated, but less desirable, to transmit audio and/or video information from the projection device 201 to the projection target 301 in unencoded form.

In step 421, the projection target 301 renders and/or plays the received information as appropriate via a display screen, speakers, etc. as needed. Certain technologies usable to implement embodiments of the invention, such as Terminal Services by MICROSOFT of Redmond, Washington, do not automatically allow display of information simultaneously on both a terminal client screen and a terminal server screen. In such cases, shadowing, such as is used in MICROSOFT Remote Assistance, may be used to provide the terminal server display.

It can be seen from the foregoing description that the terminal services session described herein actually involves a reverse terminal server model, wherein the server initiates a connection by instructing the client to connect. It is this model, among other improvements, which allows the some of the beneficial behavior described above with respect to certain embodiments of the invention.

Although the embodiments of the invention have been variously described using either a group of one or more user-associated devices, such as laptop computers, as the projection target devices, or using a dedicated device such as a conference room projector as the projection target device, it will be understood that the invention also contemplates situations wherein both one or more user-associated devices and one or more dedicated devices simultaneously serve as projection targets. For example, while a conference presentation may occur primarily via a dedicated projection device, a particular user may wish to see the presentation at his or her laptop computer due to deficiencies in eyesight, or for other reasons. Additionally, although the foregoing description has treated the projection target(s) as being somewhat distant from the projection device 201 (although generally in the same room) such is not necessary. For example, the invention can be used in one embodiment to provide dual screen functionality for the projection device 201. That is, the projection target screen may display some further portion of the desktop shown by the projection device screen. Alternatively, although less desirably, the invention may be used in one embodiment to project or receive information beyond the bounds of a physical room. For example, an authorized user in an office may operate a projection device or target, such as a desktop PC, to participate in a conference in a nearby room.

According to an embodiment of the invention, the projector control point 303 of the projection device 201 uses additional information available from the projection device 201 or from a network to which the projection device 201 is attached or attachable to further refine its operation. For example, the projector control point 303 may access the calendar of the user of the projection device 201 to select a projection target device from a number of possible candidate devices. For example, the OUTLOOK brand mail utility by MICROSOFT can maintain a user's schedule including information such as the room in which a scheduled conference is to be held. The projector control point 303 of the projection device 201 can use this information to select which of a number of nearby projection devices is the appropriate one with which to connect at the scheduled time. In particular, the projection device associated with the conference room in which the conference is scheduled should be selected, or presented to the user as a probable best selection.

In view of the many possible embodiments to which the principles of this invention may be applied, it should be recognized that the embodiments described herein with respect to the drawing figures are meant to be illustrative only and should not be taken as limiting the scope of invention. For example, those of skill in the art will recognize that the elements of the illustrated embodiments shown in software may be implemented in hardware and vice versa or that the illustrated embodiments can be modified in arrangement and detail without departing from the spirit of the invention. Furthermore, although network connections are illustrated herein as lines, no limitation should thereby be imparted to the invention. Except where otherwise noted, network connections may be circuit-switched, packet-switched, or otherwise, and may be transient or permanent, hard-wired or wireless, operating via any suitable protocol. Moreover, the exact values such as for time periods given in the above description are exemplary only, and may be varied without departing from the scope of the invention. Therefore, the invention as described herein contemplates all such embodiments as may come within the scope of the following claims and equivalents thereof.

## Claims

1. A method of presenting data from a first computing device (201) on a projector (203-207; 301), the method comprising:
advertising the presence of the projector by the projector;
automatically becoming aware (403) of the presence of the projector by the first computing device;
transmitting an indication of capabilities of the projector from the projector to the first computing device;
sending (411) to the projector a request for the projector to open a data exchange session back to the first computing device;
receiving (415) from the projector a connection request, whereby acceptance of the connection request opens (417) a data exchange connection between the first computing device and the projector; and
sending (419) data from the first computing device to the projector via the data exchange connection, whereby the data can be rendered or played (421) by the projector;
**characterised in that** the data exchange connection between the first computing device and the projector involves a reverse terminal server model and is a terminal services connection, wherein a terminal services server (307) operating on the first computing device initiates a terminal services connection by instructing a terminal services client (313) operating on the projector to connect.

2. The method according to claim 1 wherein the first computing device is a computing device of a type selected from the group consisting of laptop computer, desktop computer, and handheld computing device.

3. The method according to claim 2, wherein the data exchange connection comprises a link over a network including at least one wireless link (213-225).

4. The method according to claim 3, wherein the computing device comprises a wireless interface to the at least one wireless link.

5. The method according to claim 1, wherein the projector is a computing device.

6. The method according to claim 1, further comprising:
automatically becoming aware of the presence of a second computing device;
sending to the second computing device a request for the second computing device to open a data exchange session back to the first computing device;
receiving from the second computing device a connection request, whereby acceptance of the connection request opens a data exchange connection between the first computing device and the second computing device; and
sending data from the first computing device to the second computing device via the data exchange connection between the first computing device and the second computing device, whereby the second computing device can render or play the data.

7. The method according to claim 6, wherein the second computing device is a laptop computer.

8. The method according to claim 1, wherein sending data from the first computing device to the projector comprises sending information of at least one type selected from the group of types consisting of graphical information, video information, audio information, animated information, and textual information.

9. The method according to claim 1, wherein sending data from the first computing device to the projector comprises sending information consisting of audio information.

10. The method according to claim 1 wherein automatically becoming aware of the presence of the projector comprises utilizing the Universal Plug and Play protocol to identify the projector.

11. The method according to claim 1, wherein the terminal services client is hosted at the projector and the terminal services server is hosted at the first computing device.

12. The method according to claim 1, further comprising displaying the data on a visual display of the first computing device.

13. The method according to claim 1, further comprising passing control from the first computing device to a second computing device, whereby the second computing device may send data to the projector to be rendered or played by the projector.

14. The method according to claim 1, further comprising preventing a second computing device from sending to the projector data to be rendered or played.

15. The method according to claim 1, wherein the presenting of data comprises replicating screen data from the first computing device to the projector,
wherein automatically becoming aware of the presence of the projector comprises receiving of an indication from a projection target locator resident on the computing device of the presence of the projector;
wherein sending to the projector a request comprises causing the projection target locator to transmit a data exchange connection invitation to the projector;
wherein receiving from the projector a connection request comprises receiving of a connection request responsive to the transmitted connection invitation, and opening a data exchange connection between the first computing device and the projector in response to the connection request; and
wherein the data sent to the projector is the replicated screen data, whereby the screen data is displayed by the projector.

16. A computing device (201) for employing a projector (203-207) to project displayable data, comprising:
a projection controller (303) hosted by the computing device;
a discovery tool (305) operating on the computing device and communicably linked with the projection controller for discovering the projector and receiving from the projector an indication of the capabilities of the projector; and
a terminal services server (307) operating on the computing device and communicably linked with the projection controller for accepting and conducting a data exchange connection between the computing device and the projector, wherein the displayable data is transmitted from the computing device to the projector; and
**characterised in that** the data exchange connection involves a reverse terminal server model and is a terminal services connection, wherein the terminal services server (307) initiates the terminal services connection by instructing a terminal services client (313) operating on the projector to connect.

17. The computing device according to claim 16, wherein the computing device is a computing device of a type selected from the group consisting of laptop computer, desktop computer, and handheld computing device.

18. The computing device according to claim 16, wherein the data exchange connection comprises a link over a network including at least one wireless link(213-225).

19. The computing device according to claim 16, wherein the displayable data comprises information of at least one type selected from the group of types consisting of graphical information, video information, audio information, animated information, and textual information.

20. The computing device according to claim 16, wherein the discovery tool operates according to the Universal Plug and Play protocol.

21. The computing device according to claim 16, wherein projecting displayable data comprises remotely presenting screen data of a computing device; and wherein the discovery tool comprises means for discovering a remote display device, the system comprising:
means for inviting the remote display device to initiate a communication session with the computing device; and
means for accepting a communication session request from the remote display device, thereby opening a communication session;
wherein the screen data is transmitted to the remote display device via the communication session

22. The computing device according to claim 21, wherein the means for discovering a remote display device executes discovery in accordance with the Universal Plug and Play protocol.

23. The computing device according to claim 21, wherein the means for inviting the remote display device to initiate a communication session with the computing device comprises means for generating (409) a session ticket to be used to initiate the communication session, the session ticket being generated in coordination with the Remote Desktop Protocol.

24. A projector for receiving data from a computing device for exhibition, the projector comprising:
a projector control point (309) hosted by the projector;
a projector locator (311) operating on the projector and communicably linked with the projector control point for advertising the presence of the projector and transmitting an indication of capabilities of the projector; and
a terminal services client (313) operating on the projector and communicably linked with the projector control point for establishing and conducting a data exchange connection between the computing device and the projector, wherein displayable data is received by the projector from the computing device, **characterised in that** the data exchange connection involves a reverse terminal server model and is a terminal services connection, wherein a terminal services server (307) operating on the computing device initiates the terminal services connection by instructing the terminal services client(313) operating on the projector to connect.

25. The projector according to claim 24, wherein the terminal services session server is hosted by the computing device.

26. The projector according to claim 24, wherein the projector is a device of a type selected from the group consisting of laptop computer, desktop computer, conference room projector, and hand-held device.

27. The projector according to claim 24, wherein the projector is linked via a wired link to a network infrastructure to which the computing device is linked via a wireless link (213-225).

28. The projector according to claim 24, wherein the projector and the computing device are wirelessly linked to a common network infrastructure.

29. The projector according to claim 24, wherein the projector and the computing device are wirelessly linked via an ad hoc wireless network.

30. The projector according to claim 24, wherein the data for exhibition comprises information of at least one type selected from the group of types consisting of graphical information, video information, audio information, animated information, and textual information.

31. The projector according to claim 24, wherein the projector locator operates in accordance with the Universal Plug and Play protocol to advertise the presence and capabilities of the projector.

32. The projector according to claim 24, wherein the projector is a large-scale display device.

33. A computer program embodied on a computer-readable medium, the computer program comprising computer program code means adapted to perform, when said program is run on a computing device (201), the following program code steps for presenting data from the computing device on a remote projector (301):
automatically ascertaining (403) the presence of the remote projector;
receiving an indication of capabilities of the remote projector from the remote projector;
sending (411) to the remote projector a request for the remote projector to open a data exchange session back to the computing device;
receiving (415) from the remote projector a connection request, whereby acceptance of the connection request opens (417) a data exchange connection between the computing device and the remote projector; and
sending (419) data from the computing device to the remote projector via the data exchange connection, whereby the data can be rendered or played (421) by the remote projector;
**characterised in that** the data exchange connection between the computing device and the projector involves a reverse terminal server model and is a terminal services connection, wherein a terminal services server (307) operating on the computing device initiates the terminal services connection by instructing a terminal services client (313) operating on the projector to connect.

34. The computer-readable medium according to claim 33, wherein the data exchange connection comprises a network connection having at least one wireless link.

35. A computer program embodied on a computer-readable medium, the computer program comprising computer program code means adapted to perform, when said program is run on a remote projector (301), the following program code steps for presenting data from a computing device (201) on the remote projector:
advertising the presence of the remote projector by the remote projector;
transmitting from the remote projector to the computing device an indication of capabilities of the remote projector;
receiving at the remote projector from the computing device a request for the remote projector to open a data exchange session to the computing device;
sending from the remote projector to the computing device a connection request, whereby acceptance of the connection request by the computing device opens (417) a data exchange connection between the computing device and the remote projector;
receiving data at the remote projector from the computing device via the data exchange connection; and
causing the received data to be rendered or played (421) in a human-perceivable manner; **characterised in that** the data exchange connection involves a reverse terminal server model and is a terminal services connection, wherein a terminal services server (307) operating on the computing device initiates the terminal services connection by instructing a terminal services client (313) operating on the projector to connect.

## Patentansprüche

1. Verfahren zum Präsentieren von Daten von einem ersten Computergerät (201) auf einem Projektor (203-207, 301), wobei das Verfahren umfasst:
Bekanntmachen der Präsenz des Projektors durch den Projektor;
Automatisches erkennen (403) der Präsenz des Projektors durch das erste Computergerät;
Übermitteln einer Angabe der Fähigkeiten des Projektors von dem Projektor zu dem ersten Computergerät;
Senden (411), an den Projektor, einer Anfrage für den Projektor, eine Datenaustausch-Session zurück zu dem ersten Computergerät zu öffnen;
Empfangen (415), durch den Projektor, einer Verbindungsanfrage, wobei das Akzeptieren der Verbindungsanfrage eine Datenaustauschverbindung zwischen dem ersten Computergerät und dem Projektor öffnet (417); und
Senden (419) von Daten von dem ersten Computergerät zu dem Projektor über die Datenaustauschverbindung, wobei die Daten durch den Projektor dargestellt oder abgespielt (421) werden können;
**dadurch gekennzeichnet, dass** die Datenaustauschverbindung zwischen dem ersten Computergerät und dem Projektor ein umgekehrtes (reverse) Terminalserver-Modell einbezieht und sie eine Terminal-Services-Verbindung ist, wobei ein Terminal-Services-Server (307), der auf dem ersten Computergerät läuft, eine Terminal-Services-Verbindung **dadurch** initiiert, dass er einen Terminal-Services-Client (313), der auf dem Projektor läuft, anweist, sich zu verbinden.

2. Verfahren gemäß Anspruch 1, wobei das erste Computergerät ein Computergerät eines Typs ist, der aus der Gruppe von Laptopcomputer, Desktopcomputer und tragbarem (handheld) Computergerät ausgewählt ist.

3. Verfahren gemäß Anspruch 2, wobei die Datenaustauschverbindung einen Link (Verbindung) über ein Netzwerk umfasst, das mindestens einen kabellosen Link (213-225) einschließt.

4. Verfahren gemäß Anspruch 3, wobei das Computergerät eine kabellose Schnittstelle zu dem mindestens einen kabellosen Link umfasst.

5. Verfahren gemäß Anspruch 1, wobei der Projektor ein Computergerät ist.

6. Verfahren gemäß Anspruch 1, das des Weiteren umfasst:
Automatisches erkennen der Präsenz eines zweiten Computergerätes;
Senden, an das zweite Computergerät, einer Anfrage für das zweite Computergerät, eine Datenaustausch-Session zurück zu dem ersten Computergerät zu öffnen;
Empfangen einer Verbindungsanfrage von dem zweiten Computergerät, wobei das Akzeptieren der Verbindungsanfrage eine Datenaustauschverbindung zwischen dem ersten Computergerät und dem zweiten Computergerät öffnet; und
Senden von Daten von dem ersten Computergerät zu dem zweiten Computergerät über die Datenaustauschverbindung zwischen dem ersten Computergerät und dem zweiten Computergerät, wobei das zweite Computergerät die Daten darstellen oder abspielen kann.

7. Verfahren gemäß Anspruch 6, wobei das zweite Computergerät ein Laptopcomputer ist.

8. Verfahren gemäß Anspruch 1, wobei das Senden von Daten von dem ersten Computergerät zu dem Projektor das Senden von Informationen umfasst, die mindestens einen Typ aufweisen, der aus der Gruppe mit Typen ausgewählt ist, die aus graphischen Informationen, Videoinformationen, Audioinformationen, animierten Informationen und Textinformationen besteht.

9. Verfahren gemäß Anspruch 1, wobei das Senden von Daten von dem ersten Computergerät zu dem Projektor das Senden von Informationen umfasst, die aus Audioinformationen bestehen.

10. Verfahren gemäß Anspruch 1, wobei das automatische Erkennen der Präsenz des Projektors das Benutzen des Universal-Plug-and-Play-Protokolls umfasst, um den Projektor zu identifizieren.

11. Verfahren gemäß Anspruch 1, wobei der Terminal-Services-Client auf dem Projektor gehostet (ausgeführt) wird und der Terminal-Services-Server auf dem ersten Computergerät gehostet wird.

12. Verfahren gemäß Anspruch 1, das des Weiteren das Anzeigen der Daten auf einer visuellen Anzeige des ersten Computergerätes umfasst.

13. Verfahren gemäß Anspruch 1, das des Weiteren das Weitergeben der Steuerung von dem ersten Computergerät zu einem zweiten Computergerät umfasst, wobei das zweite Computergerät Daten an den Projektor senden kann, um sie durch den Projektor darzustellen oder abzuspielen.

14. Verfahren gemäß Anspruch 1, das des Weiteren das Verhindern, dass ein zweites Computergerät Daten an den Projektor sendet, um sie darzustellen oder abzuspielen, umfasst.

15. Verfahren gemäß Anspruch 1, wobei das Präsentieren von Daten das Nachbilden (replicate) von Bildschirmdaten von dem ersten Computergerät zu dem Projektor umfasst,
wobei das automatische Erkennen der Präsenz des Projektors das Empfangen eines Hinweises auf die Präsenz des Projektors von einem Projektionsziel-Lokalisierer (locator), der sich auf dem Computergerät befindet, umfasst;
wobei das Senden einer Anfrage an den Projektor umfasst, dass der Projektionsziel-Lokalisierer veranlasst wird, eine Datenaustauschverbindungseinladung an den Projektor zu übertragen;
wobei das Empfangen einer Verbindungsanfrage durch den Projektor das Empfangen einer Verbindungsanfrage als Antwort auf die übermittelte Verbindungseinladung, und das Öffnen einer Datenaustauschverbindung zwischen dem ersten Computergerät und dem Projektor als Antwort auf die Verbindungsanfrage umfasst; und
wobei die Daten, die zu dem Projektor gesendet werden, die nachgebildeten Bildschirmdaten sind, wobei die Bildschirmdaten durch den Projektor angezeigt werden.

16. Ein Computergerät (201) zum Einsetzen eines Projektors (203-207), um anzeigbare (displayable) Daten zu projizieren, wobei das Gerät umfasst:
eine Projektionssteuerung (303), die durch das Computergerät gehostet wird;
ein Entdeckungshilfsmittel (305), das auf dem Computergerät arbeitet und kommunikationsfähig mit der Projektionssteuerung verbunden ist, zum Entdecken des Projektors und zum Empfangen, von dem Projektor, einer Angabe der Fähigkeiten des Projektors; und
ein Terminal-Services-Server (307), der auf dem Computergerät arbeitet und kommunikationsfähig mit der Projektionssteuerung verbunden ist, zum Akzeptieren und Betreiben einer Datenaustauschverbindung zwischen dem Computergerät und dem Projektor, wobei die anzeigbaren Daten von dem Computergerät zu dem Projektor übermittelt werden; und
**dadurch gekennzeichnet, dass**
die Datenaustauschverbindung ein umgekehrtes (reverse)Terminal-Server-Modell einbezieht und eine Terminal-Services-Verbindung ist, wobei der Terminal-Services-Server (307) die Terminal-Services-Verbindung **dadurch** initiiert, dass er einen Terminal-Services-Client (313), der auf dem Projektor läuft, instruiert, sich zu verbinden.

17. Computergerät gemäß Anspruch 16, wobei das Computergerät ein Computergerät eines Typs ist, der aus der Gruppe ausgewählt wurde, die aus einem Laptopcomputer, Desktopcomputer und tragbarem Computergerät besteht.

18. Computergerät gemäß Anspruch 16, wobei die Datenaustauschverbindung einen Link (Verbindung) über ein Netzwerk umfasst, das mindestens einen kabellosen Link (213-225) einschließt.

19. Computergerät gemäß Anspruch 16, wobei die anzeigbaren Daten Informationen umfassen, die mindestens von einem Typ sind, der von der Gruppe an Typen ausgewählt ist, die aus graphischen Informationen, Videoinformationen, Audioinformationen, animierten Informationen und Textinformationen besteht.

20. Computergerät gemäß Anspruch 16, wobei das Entdeckungshilfsmittel gemäß dem Universal-Plug-and-Play-Protokoll arbeitet.

21. Computergerät gemäß Anspruch 16, wobei das Projizieren der anzeigbaren Daten das entfernte (remotely) Präsentieren von Bildschirmdaten eines Computergerätes umfasst; und wobei das Entdeckungshilfsmittel Mittel zum Entdecken eines entferntliegenden (remote) Anzeigegerätes umfasst, wobei das System umfasst:
Mittel zum Auffordern des entfernten Anzeigegerätes, eine Datenübertragungs-Session mit dem Computergerät zu initiieren; und
Mittel zum Akzeptieren einer Anfrage für eine Datenübertragungs-Session von dem entfernten Anzeigegerät, wodurch eine Datenübertragungs-Session geöffnet wird;
wobei die Bildschirmdaten zu dem entfernten Anzeigegerät über die Datenübertragungs-Session übermittelt werden.

22. Computergerät gemäß Anspruch 21, wobei die Mittel zum Entdecken eines entfernten Anzeigegerätes die Entdeckung gemäß dem Universal-Plug-and-Play-Protokolls ausführen.

23. Computergerät gemäß Anspruch 21, wobei die Mittel zum Auffordern des entfernten Anzeigegerätes, eine Datenübertragungs-Session mit dem Computergerät zu initiieren, Mittel zum Generieren (409) eines Session-Tickets umfasst, das zum Initiieren der Datenübertragungs-Session verwendet werden soll, wobei das Session-Ticket in Koordination mit dem Remote-Desktop-Protokoll generiert wird.

24. Projektor zum Empfangen von Daten von einem Computergerät zur Vorführung, wobei der Projektor umfasst:
einen Projektorsteuerungspunkt (309), der durch den Projektor gehostet wird;
einen Projektorlokalisierer (locator) (311), der auf dem Projektor läuft und kommunikationsfähig mit dem Projektorsteuerungspunkt verbunden ist, zum Bekannt machen der Präsenz des Projektors und zum Übertragen einer Angabe der Fähigkeiten des Projektors; und
ein Terminal-Services-Client (313), der auf dem Projektor läuft und kommunikationsfähig mit dem Projektorsteuerungspunkt verbunden ist, zum Herstellen und Führen einer Datenaustauschverbindung zwischen dem Computergerät und dem Projektor, wobei anzeigbare Daten von dem Computergerät durch den Projektor empfangen werden, **dadurch gekennzeichnet, dass** die Datenaustauschverbindung ein umgekehrtes (reverse) Terminal-Server-Modell einbezieht und eine Terminal-Services-Verbindung ist, wobei ein Terminal-Services-Server (307), der auf dem Computergerät läuft, die Terminal-Services-Verbindung **dadurch** initiiert, dass er den Terminal-Services-Client (313), der auf dem Projektor läuft, instruiert, sich zu verbinden.

25. Projektor gemäß Anspruch 24, wobei der Terminal-Services-Session-Server durch das Computergerät gehostet wird.

26. Projektor gemäß Anspruch 24, wobei der Projektor ein Gerät von einem Typ ist, der aus einer Gruppe ausgewählt wird, die aus einem Laptopcomputer, Desktopcomputer, Konferenzzimmerprojektor und tragbarem (hand-held) Gerät besteht.

27. Projektor gemäß Anspruch 24, wobei der Projektor über einen verkabelten Link (Verbindung) zu einer Netzwerkinfrastruktur verbunden ist, zu der das Computergerät über einen kabellosen Link (213-225) verbunden ist.

28. Projektor gemäß Anspruch 24, wobei der Projektor und das Computergerät kabellos mit einer gemeinsamen Netzwerkinfrastruktur verbunden sind.

29. Projektor gemäß Anspruch 24, wobei der Projektor und das Computergerät kabellos über ein Ad-hoc-Kabellosnetzwerk verbunden sind.

30. Projektor gemäß Anspruch 24, wobei die Daten zur Vorführung Informationen von mindestens einem Typ umfassen, der aus der Gruppe an Typen ausgewählt ist, die aus graphischen Informationen, Videoinformationen, Audioinformationen, animierten Informationen und Textinformationen besteht.

31. Projektor gemäß Anspruch 24, wobei der Projektorlokalisierer entsprechend dem Universal-Plug-and-Play-Protokoll arbeitet, um die Präsenz und die Fähigkeiten des Projektors bekannt zu machen.

32. Projektor gemäß Anspruch 24, wobei der Projektor ein großflächiges Anzeigegerät ist.

33. Ein Computerprogramm, das auf einem computerlesbaren Datenträger enthalten ist, wobei das Computerprogramm Computerprogrammcodemittel umfasst, die angepasst sind, wenn das Programm auf einem Computergerät (201) läuft, die folgenden Programmcodeschritte zum Präsentieren von Daten von dem Computergerät auf einem entfernten (remote) Projektor (301) durchzuführen:
Automatisches Ermitteln (403) der Präsenz des entfernten Projektors;
Empfangen eine Angabe der Fähigkeiten des entfernten Projektors von dem entfernten Projektor;
Senden (411), zu dem entfernten Projektor, einer Anfrage für den entfernten Projektor, eine Datenaustausch-Session zurück zu dem Computergerät zu öffnen;
Empfangen (415), von dem entfernten Projektor, einer Verbindungsanfrage, wobei das Akzeptierne der Verbindungsanfrage eine Datenaustauschverbindung zwischen dem Computergerät und dem entfernten Projektor öffnet (417); und
Senden (419) von Daten von dem Computergerät zu dem entfernten Projektor über die Datenaustauschverbindung, wobei die Daten durch den entfernten Projektor dargestellt oder abgespielt (421) werden können;
**dadurch gekennzeichnet, dass** die Datenaustauschverbindung zwischen dem Computergerät und dem Projektor ein umgekehrtes (reverse) Terminal-Server-Modell einbezieht und eine Terminal-Services-Verbindung ist, wobei ein Terminal-Services-Server (307), der auf dem Computergerät arbeitet, die Terminal-Services-Verbindung **dadurch** initiiert, dass der einen Terminal-Services-Client (313), der auf dem Projektor arbeitet, instruiert, sich zu verbinden.

34. Computerlesbarer Datenträger gemäß Anspruch 33, wobei die Datenaustauschverbindung eine Netzwerkverbindung umfasst, die mindestens einen kabellosen Link aufweist.

35. Computerprogramm, das auf einem computerlesbaren Datenträger enthalten ist, wobei das Computerprogramm Computerprogrammcodemittel umfasst, die angepasst sind, wenn das Programm auf einem entfernten (remote) Projektor (301) läuft, die folgenden Programmcodeschritte zum Präsentieren von Daten von einem Computergerät (201) auf dem entfernten Projektor durchzuführen:
Bekanntmachen der Präsenz des entfernten Projektors durch den entfernten Projektor;
Übermitteln, von dem entfernten Projektor zu dem Computergerät, einer Angabe der Fähigkeiten des entfernten Projektors;
Empfangen, bei dem entfernten Projektor von dem Computergerät, einer Anfrage an den entfernten Projektor, eine Datenaustausch-Session zu dem Computergerät zu öffnen;
Senden, von dem entfernten Projektor zu dem Computergerät, einer Verbindungsanfrage, wobei das Akzeptieren der Verbindungsanfrage durch das Computergerät eine Datenaustauschverbindung zwischen dem Computergerät und dem entfernten Projektor öffnet (417);
Empfangen von Daten, bei dem entfernten Projektor von dem Computergerät, über die Datenaustauschverbindung; und
Verursachen, dass die empfangenen Daten in einer für Menschen wahrnehmbaren Art und Weise dargestellt oder abgespielt (421) werden; **dadurch gekennzeichnet, dass** die Datenaustauschverbindung ein umgekehrtes (reverse) Terminal-Service-Modell einbezieht und eine Terminal-Services-Verbindung ist, wobei ein Terminal-Services-Server (307), der auf dem Computergerät arbeitet, die Terminal-Services-Verbindung **dadurch** initiiert, dass er einen Terminal-Services-Client (313), der auf dem Projektor arbeitet, instruiert, sich zu verbinden.

## Revendications

1. Procédé de présentation d'informations, à partir d'un premier dispositif informatique (201), sur un projecteur (203 à 207 ; 301), le procédé comprenant :
l'annonce de la présence du projecteur, par le projecteur ;
la constatation automatique (403) de la présence du projecteur, par le premier dispositif informatique ;
la transmission d'une indication des possibilités du projecteur, par le projecteur, au premier dispositif informatique ;
l'envoi (411), au projecteur, d'une demande pour que le projecteur ouvre une session d'échange de données avec le premier dispositif informatique ;
la réception (415), en provenance du projecteur, d'une demande de connexion, de sorte que l'acceptation de la demande de connexion ouvre (417) une connexion d'échange de données entre le premier dispositif informatique et le projecteur ; et
l'envoi (419) de données par le premier dispositif informatique au projecteur, par la connexion d'échange de données, de sorte que les données peuvent être restituées ou reproduites (421) par le projecteur ;
**caractérisé en ce que** la connexion d'échange de données entre le premier dispositif informatique et le projecteur implique un modèle de serveur terminal inverse et est une connexion de services terminaux, dans lequel un serveur de services terminaux (307) fonctionnant sur le premier dispositif informatique lance une connexion de services terminaux en donnant, à un client de services terminaux (313) fonctionnant sur le projecteur, l'instruction de se connecter.

2. Procédé selon la revendication 1, dans lequel le premier dispositif informatique est un dispositif informatique d'un type sélectionné à partir du groupe composé d'un ordinateur portable, d'un ordinateur de bureau, et d'un dispositif informatique de poche.

3. Procédé selon la revendication 2, dans lequel la connexion d'échange de données comprend une liaison au moyen d'un réseau comportant au moins une liaison sans fil (213 à 225).

4. Procédé selon la revendication 3, dans lequel le dispositif informatique comprend une interface sans fil vers ladite au moins une liaison sans fil.

5. Procédé selon la revendication 1, dans lequel le projecteur est un dispositif informatique.

6. Procédé selon la revendication 1, comprenant en outre :
la constatation automatique de la présence d'un deuxième dispositif informatique ;
l'envoi, au deuxième dispositif informatique, d'une demande pour que le deuxième dispositif informatique ouvre une session d'échange de données avec le premier dispositif informatique ;
la réception d'une demande de connexion, en provenance du deuxième dispositif informatique, de sorte que l'acceptation de la demande de connexion ouvre une connexion d'échange de données entre le premier dispositif informatique et le deuxième dispositif informatique ; et
l'envoi de données par le premier dispositif informatique au deuxième dispositif informatique, au moyen de la connexion d'échange de données entre le premier dispositif informatique et le deuxième dispositif informatique, de sorte que le deuxième dispositif informatique peut restituer ou reproduire les données.

7. Procédé selon la revendication 6, dans lequel le deuxième dispositif informatique est un ordinateur portable.

8. Procédé selon la revendication 1, dans lequel l'envoi de données du premier dispositif informatique au projecteur comprend l'envoi d'informations d'au moins un type sélectionné à partir du groupe de types composé d'informations graphiques, d'informations vidéo, d'informations audio, d'informations animées, et d'informations textuelles.

9. Procédé selon la revendication 1, dans lequel l'envoi de données du premier dispositif informatique au projecteur comprend l'envoi d'informations consistant en des informations audio.

10. Procédé selon la revendication 1, dans lequel la constatation automatique de la présence du projecteur comprend l'utilisation d'un protocole universel de connexion et de reproduction pour identifier le projecteur.

11. Procédé selon la revendication 1, dans lequel le client de services terminaux est hébergé au niveau du projecteur, et le serveur de services terminaux est hébergé au niveau du premier dispositif informatique.

12. Procédé selon la revendication 1, comprenant en outre l'affichage des données sur un dispositif d'affichage visuel du premier dispositif informatique.

13. Procédé selon la revendication 1, comprenant en outre le passage de la commande du premier dispositif informatique à un deuxième dispositif informatique, de sorte que le deuxième dispositif informatique peut envoyer des données au projecteur, pour une restitution ou une reproduction par le projecteur.

14. Procédé selon la revendication 1, comprenant en outre le fait d'empêcher un deuxième dispositif informatique d'envoyer, au projecteur, des données à restituer ou à reproduire.

15. Procédé selon la revendication 1, dans lequel la présentation de données comprend la réplication de données d'écran, du premier dispositif informatique au projecteur,
dans lequel la constatation automatique de la présence du projecteur comprend la réception d'une indication de la présence du projecteur, en provenance d'un dispositif de repérage de cible de projection, résidant dans le dispositif informatique ;
dans lequel l'envoi, au projecteur, d'une demande comprend le fait d'amener le dispositif de repérage de cible de projection à transmettre, au projecteur, une invitation à une connexion d'échange de données ;
dans lequel la réception, en provenance du projecteur, d'une demande de connexion comprend la réception d'une demande de connexion en réponse à l'invitation transmise pour une connexion, et l'ouverture d'une connexion d'échange de données entre le premier dispositif informatique et le projecteur, en réponse à la demande de connexion ; et
dans lequel les données envoyées au projecteur sont les donnés répliquées d'écran, de sorte que les données sont présentées par le projecteur.

16. Dispositif informatique (201) prévu pour utiliser un projecteur (203 à 207) pour projeter des données affichables, comprenant :
un gestionnaire de projection (303) hébergé par le dispositif informatique ;
un outil de recherche (305) fonctionnant sur le dispositif informatique et relié, de façon à pouvoir communiquer avec le gestionnaire de projection afin de rechercher le projecteur et de recevoir, du projecteur, une indication des possibilités du projecteur ; et
un serveur de services terminaux (307) fonctionnant sur le dispositif informatique et relié de façon à pouvoir communiquer avec le gestionnaire de projection afin d'accepter et d'exécuter une connexion d'échange de données entre le dispositif informatique et le projecteur, dans lequel les données affichables sont transmises par le dispositif informatique au projecteur ; et
**caractérisé en ce que** la connexion d'échange de données implique un modèle de serveur terminal inverse et est une connexion de services terminaux, dans lequel le serveur de services terminaux (307) lance la connexion de services terminaux en donnant, à un client de services terminaux (313) fonctionnant sur le projecteur, l'instruction de se connecter.

17. Dispositif informatique selon la revendication 16, dans lequel le dispositif informatique est un dispositif informatique d'un type sélectionné à partir du groupe composé d'un ordinateur portable, d'un ordinateur de bureau, et d'un dispositif informatique de poche.

18. Dispositif informatique selon la revendication 16, dans lequel la connexion d'échange de données comprend une liaison au moyen d'un réseau comportant au moins une liaison sans fil (213 à 225).

19. Dispositif informatique selon la revendication 16, dans lequel les données affichables comprennent des informations d'au moins un type sélectionné à partir du groupe de types, composé d'informations graphiques, d'informations vidéo, d'informations audio, d'informations animées, et d'informations textuelles.

20. Dispositif informatique selon la revendication 16, dans lequel l'outil de recherche fonctionne selon le protocole universel de connexion et de reproduction.

21. Dispositif informatique selon la revendication 16, dans lequel la projection de données affichables comprend la présentation à distance de données d'écran d'un dispositif informatique ; et dans lequel l'outil de recherche comprend des moyens pour rechercher un dispositif d'affichage distant, le système comprenant :
des moyens pour inviter le dispositif d'affichage distant à lancer une session de communication avec le dispositif informatique ; et
des moyens pour accepter une demande de session de communication provenant du dispositif d'affichage distant, pour ainsi ouvrir une session de communication ;
dans lequel les données d'écran sont transmises au dispositif d'affichage distant au moyen de la session de communication.

22. Dispositif informatique selon la revendication 21, dans lequel les moyens de recherche d'un dispositif d'affichage distant exécutent la recherche selon le protocole universel de connexion et de reproduction.

23. Dispositif informatique selon la revendication 21, dans lequel les moyens servant à inviter le dispositif d'affichage distant à lancer une session de communication avec le dispositif informatique comprennent des moyens pour produire (409) un jeton de session à utiliser pour lancer la session de communication, le jeton de session étant produit en coordination avec le protocole d'ordinateur de bureau distant.

24. Projecteur prévu pour recevoir des données provenant d'un dispositif d'informatique pour les présenter, le projecteur comprenant :
un point de commande de projecteur (309) hébergé par le projecteur ;
un dispositif de repérage de projecteur (311) fonctionnant sur le projecteur et relié de façon à pouvoir communiquer avec le point de commande de projecteur afin de signaler la présence du projecteur et de transmettre une indication de possibilités du projecteur ; et
un client de services terminaux (313) fonctionnant sur le projecteur et relié de façon à pouvoir communiquer avec le point de commande de projecteur pour établir et exécuter une connexion d'échange de données entre le dispositif informatique et le projecteur, dans lequel des données affichables sont reçues par le projecteur en provenance du dispositif informatique,
**caractérisé en ce que** la connexion d'échange de données implique un modèle de serveur terminal inverse et est une connexion de services terminaux, dans lequel un serveur de services terminaux (307) fonctionnant sur le dispositif informatique lance la connexion de services terminaux en donnant, au client de services terminaux (313) fonctionnant sur le projecteur, l'instruction de se connecter.

25. Projecteur selon la revendication 24, dans lequel le serveur de session de services terminaux est hébergé par le dispositif informatique.

26. Projecteur selon la revendication 24, dans lequel le projecteur est un dispositif d'un type sélectionné à partir du groupe composé d'un ordinateur portable, d'un ordinateur de bureau, d'un projecteur de salle de conférence, et d'un dispositif de poche.

27. Projecteur selon la revendication 24, dans lequel le projecteur est relié, au moyen d'une liaison câblée, à une infrastructure de réseau, à laquelle est relié, par une liaison sans fil (213 à 225), le dispositif informatique.

28. Projecteur selon la revendication 24, dans lequel le projecteur et le dispositif informatique sont reliés sans fil à une infrastructure de réseau commun.

29. Projecteur selon la revendication 24, dans lequel le projecteur et le dispositif informatique sont reliés sans fil au moyen d'un réseau sans fil ad hoc.

30. Projecteur selon la revendication 24, dans lequel les données à présenter comprennent des informations d'au moins un type sélectionné à partir du groupe de types, composé d'informations graphiques, d'informations vidéo, d'informations audio, d'informations animées, et d'informations textuelles.

31. Projecteur selon la revendication 24, dans lequel le dispositif de repérage de projecteur fonctionne selon le protocole universel de connexion et de reproduction pour signaler la présence et les possibilités du projecteur.

32. Projecteur selon la revendication 24, dans lequel le projecteur est un grand dispositif de présentation.

33. Programme informatique contenu sur un support lisible par ordinateur, le programme informatique comprenant des moyens de programmation informatique propres à exécuter, lorsque ledit programme est mis en oeuvre sur un dispositif informatique (201), les étapes suivantes de programmation pour la présentation de données, provenant du dispositif informatique, sur un projecteur distant (301) :
la vérification automatique (403) de la présence du projecteur distant ;
la réception, en provenance du projecteur distant, d'une indication de possibilités du projecteur distant ;
l'envoi (411), au projecteur distant, d'une demande pour que le projecteur distant ouvre une session d'échange de données vers le dispositif informatique ;
la réception (415), en provenance du projecteur distant, d'une demande de connexion, de sorte que l'acceptation de la demande de connexion ouvre (417) une connexion d'échange de données entre le dispositif informatique et le projecteur distant ; et
l'envoi (419) de données par le dispositif informatique au projecteur distant, par la connexion d'échange de données, de sorte que les données peuvent être restituées ou reproduites (421) par le projecteur distant ;
**caractérisé en ce que** la connexion d'échange de données entre le dispositif informatique et le projecteur implique un modèle de serveur terminal inverse et est une connexion de services terminaux, dans lequel un serveur de services terminaux (307) fonctionnant sur le dispositif informatique lance la connexion de services terminaux en donnant, à un client de services terminaux (313) fonctionnant sur le projecteur, l'instruction de se connecter.

34. Support lisible par ordinateur selon la revendication 33, dans lequel la connexion d'échange de données comprend une connexion à un réseau ayant au moins une liaison sans fil.

35. Programme informatique contenu sur un support lisible par ordinateur, le programme informatique comprenant des moyens de programmation informatique propres à exécuter, lorsque ledit programme est mis en oeuvre sur un projecteur distant (301), les étapes suivantes de programmation pour la présentation de données, provenant d'un dispositif informatique (201), sur le projecteur distant :
l'annonce de la présence du projecteur distant, par le projecteur distant ;
la transmission, du projecteur distant au dispositif informatique, d'une indication de possibilités du projecteur distant ;
la réception, au niveau du projecteur distant, d'une demande provenant du dispositif informatique pour que le projecteur distant ouvre une session d'échange de données vers le dispositif informatique ;
l'envoi, par le projecteur distant, au dispositif informatique, d'une demande de connexion, de sorte que l'acceptation de la demande de connexion, par le dispositif informatique, ouvre (417) une connexion d'échange de données entre le dispositif informatique et le projecteur distant ;
la réception de données au niveau du projecteur distant en provenance du dispositif informatique, au moyen de la connexion d'échange de données ; et
le lancement de la restitution ou de la reproduction (421) des données reçues de manière perceptible par l'humain ;
**caractérisé en ce que** la connexion d'échange de données implique un modèle de serveur terminal inverse et est une connexion de services terminaux, dans lequel un serveur de services terminaux (307) fonctionnant sur le dispositif informatique lance la connexion de services terminaux en donnant, à un client de services terminaux (313) fonctionnant sur le projecteur, l'instruction de se connecter.
